# EUROPEAN PATENT APPLICATION

(11) **EP 3 229 536 A1**
(43) Date of publication of application: **11.10.2017**
(21) Application number: 17161394.6
(22) Date of filing: 16.03.2017
(51) Int. Cl.: H04W 64/00, G01P 15/00

(54) **INTERACTIVE COMMUNICATION SYSTEM, METHOD AND WEARABLE DEVICE THEREFOR**

(30) Priority: 24.03.2016 CN 201610170883
(71) Applicant: Chiun Mai Communication Systems, Inc., New Taipei City 236 (TW)
(72) Inventor: CHEN, YI-CHENG, New Taipei, Taiwan (CN); CHENG, HSIU-MIN, New Taipei, Taiwan (CN); CHUNG, CHI-HENG, New Taipei, Taiwan (CN)
(74) Representative: Cordina, Kevin John

(57) **Abstract**

An interactive communication system includes a wearable device and a network comprising a server and a plurality of base stations for serving the wearable device. The wearable device includes a sensing module, a wireless communication module and a microcontroller. The sensing module senses a position change of a user wearing the wearable device and generates a corresponding sensing signal. The wireless communication module sends a signal to the base stations. The microcontroller dynamically adjusts one of a frequency and a time interval of the sending of the signal from the wireless communication module to the base stations according to the sensing signal.

## Description

### CROSS-REFERENCE TO RELATED APPLICATIONS

This application claims priority to Chinese Patent Application No. 201610170883.X filed on March 24, 2016, the contents of which are incorporated by reference herein.

### FIELD

The disclosure generally relates to communication systems, and particularly to an interactive communication system, method, and wearable device therefor.

### BACKGROUND

Because of advantages such as small volume, convenience of use, wearable devices are widely used for security controls in particular places such as shopping malls, venues, factories and so on. The wearable devices are worn by the people in the particular places and communicate with a server and a control center by base stations so that control center can obtain information such as positions of the wearable devices timely.

In above-mentioned communication process, the wearable device commonly sends a broadcasting signal to the base stations at a fixed frequency. The sever updates the position of the wearable device according signal intensities of the signal received by the base stations. However, when the position of the wearable device is no need to be updated. For example, a position of the user is not changed, if the wearable device maintains to send the signal to the base stations at the fixed frequency, that would cause a waste of resources.

### SUMMARY

An interactive communication system includes a wearable device and a network comprising a server and a plurality of base stations for serving the wearable device. The wearable device includes a sensing module, a wireless communication module and a microcontroller. The sensing module senses a position change of a user wearing the wearable device and generates a corresponding sensing signal. The wireless communication module sends a signal to the base stations. The microcontroller dynamically adjusts one of a frequency and a time interval of the sending of the signal from the wireless communication module to the base stations according to the sensing signal.

### BRIEF DESCRIPTION OF THE DRAWINGS

Implementations of the present disclosure will now be described, by way of example only, with reference to the attached figures.
FIG. 1 is a system architecture of one embodiment of an interactive communication system.
FIG. 2 is a protocol diagram for illustrating a communication method for the communication system of FIG. 1, according to an exemplary embodiment.
FIG. 3 is a block diagram of one embodiment of an wearable device of the communication system of FIG. 1.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiment described herein can be practiced without these specific details. In other instances, methods, procedures, and components have not been described in detail so as not to obscure the related relevant feature being described. Also, the description is not to be considered as limiting the scope of the embodiments described herein. The drawings are not necessarily to scale and the proportions of certain parts may be exaggerated to better illustrate details and features of the present disclosure.

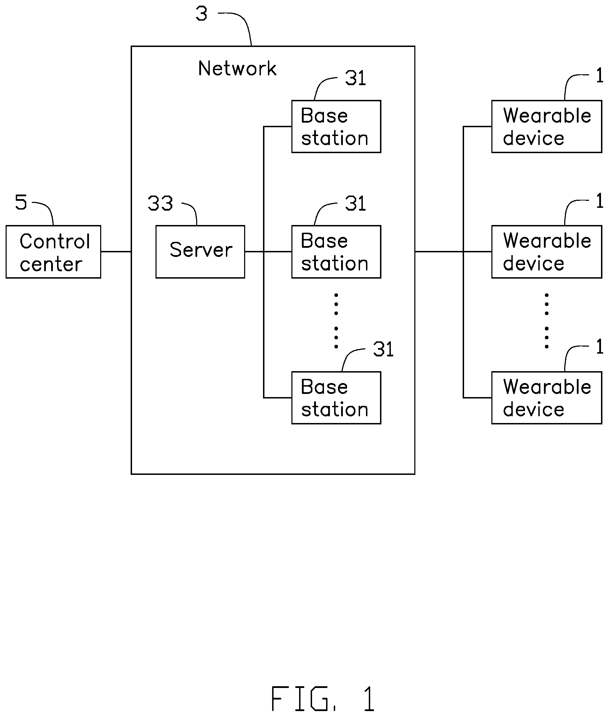

FIG. 1 shows a system architecture of one embodiment of an interactive communication system. The communication system includes at least one wearable device 1, a network 3, and a control center 5. In one embodiment, the system architecture can be implemented inside a building, e.g. a shopping mall, a factory, a hospital, a hotel, a restaurant, a airport or the like.

The network 3 includes a plurality of base stations 31 and a server 33. Each base station 31 is connected to and communicates with the server 33. The plurality of base stations 31 are located in different selected regions, for serving the wearable devices 1 in different regions. In one embodiment, the plurality of base stations 31 can be BLUETOOTH base stations or access points. The at least one wearable devices 1 can be wearable devices having a BLUETOOTH Low Energy (BLE) sending and receiving function. In this embodiment, the plurality of base stations 31 and the wearable devices 1 can be wirelessly connected via BLUETOOTH protocol. In another embodiment, the plurality of base stations 31 and the wearable devices 1 can be wirelessly connected via other short distance wireless communication protocol. The other short distance wireless communication protocols include, but not limited to, WIFI and ZIGBEE.

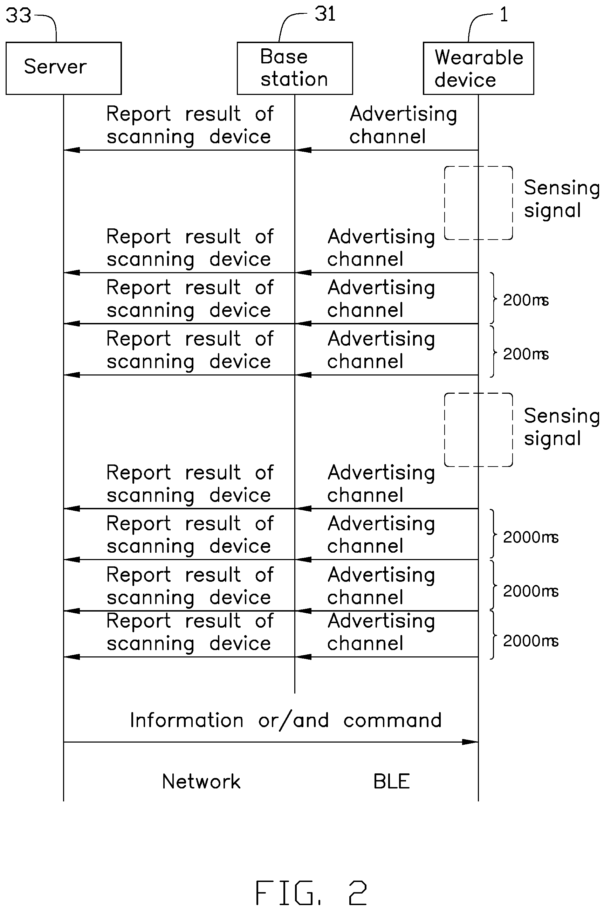

FIG. 2 illustrates that, in an exemplary embodiment, the wearable device 1 can transmit a signal to the base stations 31 via at least one advertising channel. The signal includes, but not limited to, an ID code of the wearable device 1. In addition, the base station 31 can transmit a signal to the wearable device 1. In this exemplary embodiment, the base station 31 can detect signal intensities sent from the wearable devices 1 and transmit the signal intensities and the corresponding ID codes of the wearable devices 1 to the sever 33. The server 33 stores a first position of each base station 31. The server 33 can determine a second position of each wearable device 1 according to the first position of at least one base station 31 and the signal intensity and the corresponding ID code received by the at least one base station 31. If there is just one wearable device 1, the ID code is not needed, the server 33 can determine the second position of each wearable device 1 according to the first position of at least one base station 31 and the signal intensity received by the at least one base station 31.

In other embodiment, the base stations 31 can be electronic devices which have BLUETOOTH communication modules, such as smart phones or tablet PCs. The server 33 pushes information or/and command to the wearable devices 1 by the base station 31 located in the selected region to inform the information or/and command to a user of the wearable device 1.

The control center 5 includes at least one display configured for display data and information transmitted by the wearable device 1 and stored by the server 33. The control center 5 further includes an inputting device, which is used to receive the information or/and command (namely the information or/and command pushed by the server mentioned-above) inputted by a system manager. The control center 5 transmits the inputted information or/and command to the server 33, and transmit the inputted information or/and command to all of the wearable devices 1 or selected wearable devices 1 by the server 33.

In this embodiment, the control center 5 can be any electronic devices which can communicate with the server 33. Each control center 5 can be, but not limited to, a wearable device, a handheld device, a personal computer, or a robot. The control center 5 can communicate with the network 3, transmit information or/and data to the wearable devices 1 via the base stations 31 and server 33 of the network 3 and receive information or/and data from the wearable devices 1 via the base stations 31 and server 33 of the network 3.

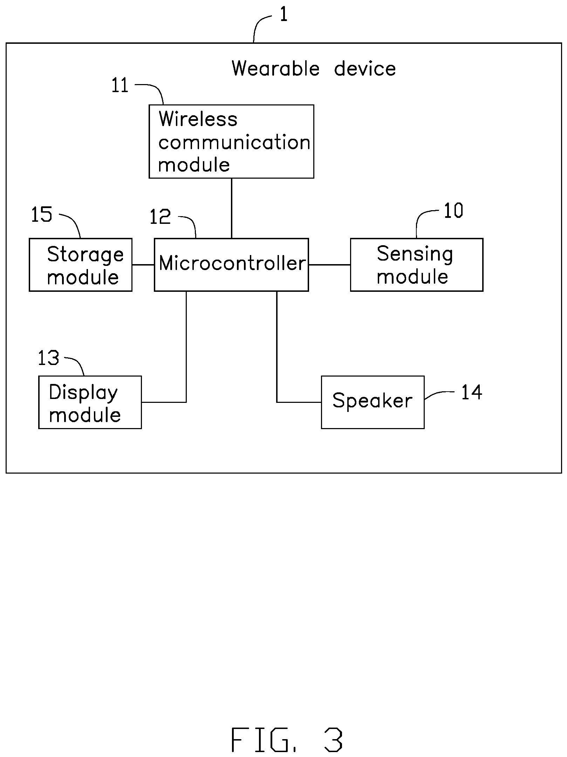

FIG. 3 illustrates, that wearable device 1 can be a wrist strap, a necklace, glasses, a helmet, a wristband, a glove, an arm band, a leg band, or any other object which can be worn by a user. In this exemplary embodiment, the wearable device 1 is a wrist strap that can be worn by a wrist of a user. The wearable device 1 includes a sensing module 10, a wireless communication module 11, a microcontroller 12, and a display module 13. The sensing module 10, the wireless communication module 11 and the display module 13 are electronically connected to the microcontroller 12.

The sensing module 10 includes a G-sensor configured for sensing a position change of the user wearing the wearable device 1 and generating a corresponding sensing signal. In this exemplary embodiment, the sensing module 10 senses steps of a movement of the user wearing the wearable device 1.

In this embodiment, the wireless communication module 11 is a BLE transceiver. The wireless communication module 11 includes an antenna (not shown) configured for sending signals to the base stations 31, and also receiving the information or/and commands from the base stations 31, and sending the received information or/and commands to the microcontroller 12.

The microcontroller 12 dynamically adjusts a frequency or a time interval of the sending of the signal from the wireless communication module 11 to the base station 31. In a first exemplary embodiment, the microcontroller 12 calculates a number of steps of a movement of the user according to the sensing signal. The microcontroller 12 controls the wireless communication module 11 to send the signal to the base stations 31 once for each preset number of steps the user moves. For example, the microcontroller 12 controls the wireless communication module 11 to send the signal to the base stations 31 once for every five steps the user moves.

In a second exemplary embodiment, the microcontroller 12 calculates a distance of a movement of the user according to the sensing signal. The microcontroller 12 controls the wireless communication module 11 to send the signal to the base stations 31 once for each preset distance the user moves. For example, the microcontroller 12 controls the wireless communication module 11 to send the signal to the base stations 31 once for every three meters the user moves.

In a third exemplary embodiment, the microcontroller 12 calculates a frequency of steps of the user, for example, a number of steps per second, or a number of steps per minute, according to the sensing signal, and determines the time interval of the sending of the signal from the wireless communication module 11 to the base stations 31. In this exemplary embodiment, when the user moves in a higher the frequency of steps, the wireless communication module 11 sends the signal to the base stations 31 in a shorter time interval. For example, when the user moves in the frequency of one step per second, the time interval of the sending of the signal from the wireless communication module 11 to the base stations 31 is about 2000ms. When the user moves in a frequency of three steps per second, the time interval of the sending of the signal from the wireless communication module 11 to the base stations 31 is about 200ms.

In a fourth exemplary embodiment, the microcontroller 12 calculates a movement speed of the user according to the sensing signal, and determines the time interval of the sending of the signal from the wireless communication module 11 to the base stations 31 according the movement speed. In this exemplary embodiment, when the user move in a higher speed, the wireless communication module 11 sends the signal to the base stations 31 in a shorter time interval. For example, when the movement speed of the user is one meter per second, the time interval of the sending of the signal from the wireless communication module 11 to the base stations 31 is about 2000ms. When the movement speed of the user is three meter per second, the time interval of the send of the signal from the wireless communication module 11 to the base stations 31 is about 200ms.

In addition, when the microcontroller 12 determines that the position of the user is not changed according to the sensing signal, the microcontroller 12 can control the wireless communication module 11 to stop sending the signal to the base stations 31. When the microcontroller 12 determines the position of the user is changed again according to the sensing signal, the microcontroller 12 controls the wireless communication module 11 to restart to send the signal to the base station 31, thereby further reducing power consumption and saving resource of the network 3.

After the microcontroller 12 receives the information or/and commands from the base station 31, the microcontroller 12 can control the display module 13 to display corresponding information for the user according to the received information or/and commands.

In other embodiment, the wearable device 1 can further include a speaker 14, configured for playing corresponding audio to the user according to the command or/and information. In addition, the wearable device 1 can further include a storage module 15, configured for storing or temporarily storing the received command or/and information and the sensing signal generated by the sensing module 10.

The wearable device 1 uses the sensing module 10 to sense the position change of the user wearing the wearable device 1, determine whether it is needed to update information of the wearable device 1, and dynamically adjust the frequency of sending the signal from the wearable device 1 to the base station 31 according to the sensing signal of the sensing module 10, thereby reducing the thereby further reducing power consumption and saving resource of the network 3.

It is to be understood, however, that even through numerous characteristics and advantages of the present disclosure have been set forth in the foregoing description, together with details of assembly and function, the disclosure is illustrative only, and changes may be made in details, especially in the matters of shape, size, and arrangement of parts within the principles of the disclosure to the full extent indicated by the broad general meaning of the terms in which the appended claims are expressed.

## Claims

1. An interactive communication system comprising:
a wearable device; and
a network comprising a server and a plurality of base stations for serving the wearable device;
wherein the wearable device comprises:
a sensing module, the sensing module sensing a position change of the wearable device worn by a user and generating a corresponding sensing signal;
a wireless communication module, the wireless communication module sending a signal to the base stations, the base stations detecting corresponding signal intensities of the signal and sending the signal intensities to the server, the server determining a position of the wearable device according to positions of the base stations and the signal intensities; and
a microcontroller, the microcontroller dynamically adjusting one of a frequency and a time interval of the sending of the signal from the wireless communication module according to the sensing signal.

2. The interactive communication system of claim 1, wherein the microcontroller calculates a number of steps of a movement of the user or a distance of the movement of the user according to the sensing signal, the microcontroller controls the wireless communication module to send the signal to the base stations once for each preset number of steps the user moves or for each preset distance the user moves.

3. The interactive communication system of claim 1, wherein the microcontroller calculates a frequency of steps of the user according to the sensing signal, and determines the time interval of the sending of the signal from the wireless communication module to the base stations according to the frequency of the steps of the user.

4. The interactive communication system of claim 1, wherein the microcontroller calculates a movement speed of the user according to the sensing signal, and determines the time interval of the sending of the signal from the wireless communication module to the base stations according the movement speed.

5. The interactive communication system of claim 1, wherein when the microcontroller determines a position of the user is not changed according to the sensing signal, the microcontroller controls the wireless communication module to stop sending the signal to the base stations, when the microcontroller determines the position of the user is changed again according to the sensing signal, the microcontroller controls the wireless communication module to restart to send the signal to the base stations.

6. A communication method for a communication system, the communication system comprising a wearable device, a server, and a plurality of base stations for serving the wearable device, the method comprising:
sensing a position change of a user wearing the wearable device and generating a corresponding sensing signal by the wearable device;
sending a signal from the wearable device to the base stations; and
dynamically adjusting one of a frequency and a time interval of the sending of the signal from the wearable device to the base stations according to the sensing signal;
detecting signal intensities of the signal by the base stations and sending the signal intensities to the server from the base stations; and
determining a position of the wearable device according to positions of the base stations and the signal intensities.

7. The communication method of claim 6, wherein the step of dynamically adjusting one of the frequency and the time interval comprises: calculating a number of steps of a movement of the user or a distance of the movement of the user according to the sensing signal, controlling the wearable device to send the signal to the base stations once for each preset number of steps the user moves or for each preset distance the user moves.

8. The communication method of claim 6, wherein the step of dynamically adjusting the frequency comprises: calculating a frequency of steps of the user according to the sensing signal, and determining the time interval of the sending of the signal from the wearable device to the base stations according to the frequency of steps of the user.

9. The communication method of claim 6, wherein the step of dynamically adjusting the frequency comprises: calculating a movement speed of the user according to the sensing signal, and determining the time interval of the sending of the signal from the wearable device to the base stations according the movement speed.

10. The communication method of claim 6, wherein the step of dynamically adjusting the frequency comprises: when determining a position of the user is not changed according to the sensing signal, stopping sending the signal from the wearable device to the base stations, and when determining the position of the user is changed again according to the sensing signal, restarting to sending the signal from the wearable device to the base stations.

11. A wearable device comprising:
a sensing module, the sensing module sensing a position change of a user wearing the wearable device and generating a corresponding sensing signal;
a wireless communication module, the wireless communication module sending a signal to base stations; and
a microcontroller, the microcontroller dynamically adjusting one of a frequency and a time interval of the sending of the signal from the wireless communication module to the base stations according to the sensing signal.

12. The wearable device of claim 11, wherein the microcontroller calculates a number of steps of a movement of the user or a distance of the movement of the user according to the sensing signal, the microcontroller controls the wireless communication module to send the signal to the base stations once for each preset number of steps the user moves or for each preset distance the user moves.

13. The wearable device of claim 11, wherein the microcontroller calculates a frequency of steps of the user according to the sensing signal, and determines the time interval of the sending of the signal from the wireless communication module to the base stations according to the frequency of the steps of the user.

14. The wearable device of claim 11, wherein the microcontroller calculates a movement speed of the user according to the sensing signal, and determines the time interval of the sending of the signal from the wireless communication module to the base stations according the movement speed.

15. The wearable device of claim 11, wherein when the microcontroller determines a position of the user is not changed according to the sensing signal, the microcontroller controls the wireless communication module to stop sending the signal to the base stations, when the microcontroller determines the position of the user is changed again according to the sensing signal, the microcontroller controls the wireless communication module to restart to send the signal to the base stations.
